# EUROPEAN PATENT APPLICATION

(11) **EP 1 839 497 A2**
(43) Date of publication of application: **03.10.2007**
(21) Application number: 07251253.6
(22) Date of filing: 23.03.2007
(51) Int. Cl.: A23K 1/14, A23K 1/02, A23K 1/00

(54) **Betaine dry product for use in animal feeds**

(30) Priority: 24.03.2006 GB 0605975
(71) Applicant: Abna limited, Peterborough PE2 9PW (GB)
(72) Inventor: Holden, Claire, Downham Market PE28 9HS (GB); Tebble, Ian, North Walsham NR28 0DB (GB)
(74) Representative: James, Anthony Christopher W.P.

(57) **Abstract**

A method of producing a betaine -rich animal feed product, comprising the steps of: providing a betaine-rich aqueous solution by chromatographic separation of sugar beet molasses; providing a dried sugar beet pulp by drying sugar beet pulp at a temperature below 400°C; mixing the aqueous solution and the dried sugar beet pulp to effect absorption of the aqueous solution by the sugar beet pulp; followed by drying the sugar beet pulp and aqueous solution. Also provided are betaine containing dry products obtainable by the above process.

## Description

The present invention relates to a solid product containing high levels of betaine for use as a component of animal feeds.

Betaine (trimethyl glycine) is a natural product found in the roots, seeds and stems of a great variety of plants. The general formula of betaine is (CH₃)₃N⁺-CH₂COO⁻. In plant and animal cells it assists in maintaining water balance, reducing the effect of osmotic pressure and is also involved in metabolism. Betaine has many useful applications due to its two main activities, an osmoregulatory function due to molecular polarity, and methyl group (CH₃) donation.

The transfer of methyl groups from one molecule to another is an important metabolic process. Betaine has three methyl groups available for donation, which allows it to replace other nutrients (e.g. choline) in transmethylation.

The transmethylation cycle is an important metabolic pathway found in all animals, regulating the synthesis of S-adenosylmethionine (SAM) from methionine. SAM is then used in the production of compounds such as carnitine, phospholipids, hormones, and to stabilize DNA and RNA. This cycle directly influences cysteine and methionine synthesis in the liver. The transmethylation-associated production of these amino acids and phospholipids can have an impact of the deposition of lean tissue in growing animals, primarily through the effect on amino acid availability for protein accretion. The methylation pathway is reliant on compounds that have the chemical ability to 'donate' methyl groups (CH₃) in metabolic reactions (betaine, methionine and choline), and it is this donation which drives and maintains the cycle in its key function: SAM synthesis. Betaine, betaine-activated folate (MTHF) and methionine are the main methyl donors within the pathway, while SAM acts as a methyl donor outside of the transmethylation cycle, for example in immune response simulation and tissue repair. Betaine as a methyl donor may also be manufactured in the body from choline. Methylation is an important process in the liver of high-performing animals such as dairy cows.

Betaine is present in a number of plants, where due to its molecular polarity it acts primarily as an osmoregulator. When fed to animals, betaine can also act as a osmoregulator in animal tissues. Thus betaine helps stabilize cell osmolarity and improve water retention in periods of stress.

Betaine is used in animal feeds as either a methyl donor or as an osmoregulator, although it will exhibit both characteristics in any one situation. When used primarily as a methyl donor, betaine can partly replace added choline and methionine, reducing feeding costs while maintaining or improving animal performance. This is widely used in poultry and pig production worldwide. As an osmoreglator, betaine is widely used in salmon smolt diets to facilitate the shock of transfer from fresh to salt water. Betaine can also help reduce the effects of diarrhoea in pigs and poultry. Betaine has been used in ruminant diets to improve animal performance and reduce fatty liver problems, as a result of improving digestion and metabolism.

The concentration of betaine in sugar beet is relatively high, 1.0% to 1.5% on a dry solids basis. When sugar beet is processed for the recovery of sucrose, betaine concentrates in the molasses. Beet molasses usually contains from 3% to 8% of betaine calculated on a dry solids basis and commercial natural betaine is usually separated from this source.

Several methods for the recovery of betaine from molasses (and other beet sugar syrups) are discussed in the literature. For example, EP-B-0345511 (Cultor) describes a method for the separation of a betaine-rich fraction from molasses by simulated moving bed (SMB) chromatography. Generally these methods produce a liquid betaine stream as a by-product of sugar recovery. For many animal feed applications a dry flowable betaine product is required for mixing with other dry components. Conventionally this type of product has been produced by crystallisation of betaine either as anhydrous or monohydrate crystal or alternatively as a hydrochloride salt. This process is relatively expensive and produces a product of much higher purity than is required for many animal feed applications.

FR-A-2788407 describes methods for the preparation of betaine-containing solid compositions for use in animal feeds by fixing a betaine-rich liquid on a suitable solid carrier. The betaine-rich liquid may be derived from beet molasses, or from a Vinasse. The solid carrier may be a solid calcium carbonate produced by the carbonatation of beet pulp, or it may be a dry beet pulp material produced by conventional drying of beet pulp at 500°C to 900°C.

In a first aspect, the present invention provides a method of producing a betaine -rich animal feed product, comprising the steps of: providing a betaine-rich aqueous solution by chromatographic separation of sugar beet molasses; providing a dried sugar beet pulp by drying sugar beet pulp at a temperature below 400°C; mixing the aqueous solution and the dried sugar beet pulp to effect absorption of the aqueous solution by the sugar beet pulp; followed by drying the mixture.

The basis of the present invention is the mixing of betaine containing liquids with a specified dry fibrous carrier, followed by a drying process to produce a dry flowable material of relatively high betaine content using cheaper technology than that required for crystallisation. The carrier used is dry sugar beet pulp produced by drying sugar beet pulp at a temperature below about 400°C. It has been found that this carrier has higher absorbency for the betaine liquid than the conventional dried sugar beet pulps used in FR-A-2788407, and is easier to process into a free flowing product.

The process according to the present invention enables a product of both high betaine content and more uniform size to be produced, which is suitable to replace crystalline betaine in some applications.

The aqueous betaine solution may be produced by chromatographic separation of beet sugar molasses, typically in a simulated moving bed apparatus, for example as described in EP-A-0345511, EP-A-0681615, EP-A-0764219 or EP-A-0910448, the entire contents of which are incorporated herein by reference. The separation typically produces a betaine rich fraction (A) at about 2-5% dry substance containing about 45-65 wt. % betaine (on dry substance), which is then suitably evaporated to about 50-60 % dry substance for storage and subsequent mixing with the beet pulp.

An additional secondary chromatographic SMB separation may then be carried out on this betaine rich fraction (A) to produce a further, enriched betaine fraction (B) with a betaine content of about 80% to about 90% by weight on dry substance, typically about 88% betaine. This fraction is suitably evaporated to 50-60 % dry substance for storage and subsequent mixing with the beet pulp.

The betaine-rich liquid is mixed with a dried sugar beet pulp to effect absorption of the betaine liquid into the pulp. The term "sugar beet pulp" refers to the sugar beet solids remaining after conventional sugar extraction and pressing. The sugar beet pulp is dried, for example in a steam dryer or a drum dryer, at a temperature below 400°C, suitably at a temperature of from about 100°C to about 300°C, preferably at a temperature of from about 150°C to about 250°C. The final moisture content is typically less than about 10%, preferably less than about 2%. The relatively low drying temperature results in a product having high porosity, light colour, and substantially free of the thermal decomposition products that are present in sugar beet pulp that has been conventionally dried at temperatures of 500°C and above.

The betaine liquid is mixed with the sugar beet pulp, typically in the weight ratio betaine liquid:dry pulp of from about 95:5 to about 80:20, for example about 90:10. The mixing step can be performed hot (50° to 100°C) or cold. Hot mixing gives some viscosity benefits resulting in easier mixing, but is not essential. Mixing is suitably carried out in a vessel with slow, high torque mixer, since the mixture is a sticky, semi-solid slurry rather than a liquid. A rotating drum type mixer would also be suitable. Mixing is suitably performed for 30 to 90 minutes to allow for absorption of liquid onto pulp.

The pulp/aqueous betaine mixture is then suitably dried to >95 % DS in a drier with sufficient agitation to reduce agglomeration of particles. Suitable dryers include fluid bed dryers or rotating drum dryers. Suitable drying temperatures are in the range of from 60°C to 200°C. Preferred conditions include a fluid bed drier at 90°C for 90 minutes, or a rotating drum drier at 150°C for 30 minutes.

The dry product may then undergo mechanical processing to break up any aggregates and produce a more uniform final product. For example, the product may be passed through a light roller mill and sieved.

In a second aspect, the present invention provides a betaine-rich animal feed product obtainable by a process according to any preceding claim, wherein said product is in the form of free flowing particles having a betaine content of 30% to 70% by weight.

The products according to the present invention are readily distinguishable from the products made in accordance with FR-A-2788407. In particular, the products according to the present invention are light tan in colour, and substantially free of cooked or burnt flavour or aroma. The products are substantially free of thermal decomposition residues of sugar.

The higher liquid absorbency of the products according to the present invention permits products to be made with higher betaine contents, for example a betaine content greater than 40wt.%, in some cases greater than 50wt.%, and even greater than 60wt.% in some cases. Generally, the betaine content of the products according to the invention is about 30% to about 70%. Typically it is about 40% if using low purity betaine liquid, and about 60% if using high purity betaine liquid.

Suitably, the products are in the form of free-flowing particles, typically 1-2mm size (i.e. at least 90wt.% of the particles pass a 2mm diameter sieve, but at least 90wt.% of the particles are retained by a 1mm diameter sieve). The moisture content of the products is suitably about 2 to about 5wt.%.

Specific embodiments of the present invention will now be described further, by way of example, as follows.

### Example 1

150g of dried milled beet pulp screened between 0.5mm and 1.0mm was mixed with 850g of betaine liquid obtained by SMB chromatographic separation of beet molasses, followed by a SMB chromatographic enrichment of the betaine fraction. The SMB method is described in the patent specifications listed above. The betaine liquid is at a concentration of 60% dry substance (DS) and 88% betaine on DS. The components were mixed for 60 minutes. The mixture was dried in a Niro fluid bed dryer at 90°C for 90 minutes.

The final product was a free-flowing, particulate solid having betaine content 68wt.% and moisture content 2%.

### Example 2

250g of dried milled pulp screened between 0.5mm and 1.0mm prepared as above we mixed with 750g of betaine liquid at 60% DS and 60% betaine on DS prepared by SMB separation of beet molasses as described above. Mixing was continued for 60 minutes. The mixture was then dried in a Niro fluid bed dryer at 90°C for 90 minutes.

The final product was a free-flowing, particulate solid having betaine content 38wt.% and moisture content 2%.

### Example 3

200g of the dried milled pulp screened between 0.5mm and 1.0mm was mixed with 800g of betaine liquid prepared as above at 60% DS and 60% betaine on DS. Mixing was continued for 60 minutes. The mixture was dried in a rotating drum dryer at 150°C for 30 minutes. The dry product was then passed through a roller mill to break up any aggregated paticles.

The final product was a free-flowing, particulate solid having betaine content 42wt.% and moisture content 1.5%.

The above embodiments have been described by way of example only. Many other embodiments falling within the scope of the accompanying claims will be apparent to the skilled reader.

## Claims

1. A method of producing a betaine -rich animal feed product, comprising the steps of: providing a betaine-rich aqueous solution by chromatographic separation of sugar beet molasses; providing a dried sugar beet pulp by drying sugar beet pulp at a temperature below 400°C; mixing the aqueous solution and the dried sugar beet pulp to effect absorption of the aqueous solution by the sugar beet pulp; followed by drying the sugar beet pulp and aqueous solution.

2. A method according to claim 1, wherein the betaine-rich aqueous solution comprises from 45% to 65% betaine on dry substance basis.

3. A method according to claim 1, wherein the betaine-rich aqueous solution comprises from 80% to 90% betaine on dry substance basis.

4. A method according to any preceding claim, wherein the betaine-rich aqueous solution comprises 50 to 60% dry substance by weight.

5. A method according to any preceding claim, wherein the step of providing dried sugar beet pulp comprises drying sugar beet pulp at a temperature of from 150°C to 250°C.

6. A method according to any preceding claim, wherein the step of providing dried sugar beet pulp comprises drying sugar beet pulp in a steam dryer or drum dryer.

7. A method according to any preceding claim, wherein the dried sugar beet pulp and the betaine-rich aqueous solution are mixed in a weight ratio pulp:solution of from 5:95 to 20:80.

8. A betaine-rich animal feed product obtainable by a process according to any preceding claim, wherein said product is in the form of free flowing particles having a betaine content of 30% to 70% by weight.
